# EUROPEAN PATENT SPECIFICATION

(11) **EP 0 475 452 B1**
(45) Date of publication and mention of the grant of the patent: **02.08.1995**
(21) Application number: 91115600.8
(22) Date of filing: 13.09.1991
(51) Int. Cl.: G11B 5/62, G11B 7/24

(54) **Use of a quasi-amorphous or amorphous zirconia dielectric layer for optical or magneto-optic data storage media**
Quasiamorphe oder amorphe dielektrische Schicht aus Zirkoniumdioxid für optische oder magnetooptische Speichermedien
Couche diélectrique quasi-amorphe ou amorphe de bioxide de zirconium pour milieux optiques ou magnéto-optiques de mémoire

(30) Priority: 14.09.1990 US 582719
(43) Date of publication of application: 18.03.1992
(60) Divisional application: 95100700.4
(73) Proprietor: Komag, Inc., Milpitas California 95035 (US)
(72) Inventor: Yamashita, Tsutomu Tom, San Jose, CA 95132 (US); Treves, David, Palo Alto, CA 94306 (US); Chen, Tu, Monte Sereno, 95030 (US); Wickramasekara, Leelaratne, San Jose, CA 95132 (US)
(74) Representative: Schmidt-Evers, Jürgen, Dipl.-Ing.

(56) References cited:
- US-A- 3 660 291
- US-A- 4 579 777
- US-A- 4 637 953
- US-A- 4 639 816
- US-A- 4 670 353
- US-A- 4 925 733
- PATENT ABSTRACTS OF JAPAN, unexamined applications, P field, vol. 12, no. 129,April 21, 1988 THE PATENT OFFICE JAPANESE GOVERNMENT page 123 P 692
- PATENT ABSTRACTS OF JAPAN, unexamined application, P field, vol. 9, no. 151,June 26, 1985 THE PATENT OFFICE JAPANESE GOVERNMENT page 72 P 367
- CHEMICAL ABSTRACTS, vol. 111, no. 10, September 04, 1989 Columbus, Ohio, USAKENNETH D. CORNETT et al. "Ion-assisted deposition of protective overlayers formagneto-optic alloys." page 630, column 1, abstract-no. 87 246s
- CHEMICAL ABSTRACTS, vol. 109, no. 2, July 11, 1988 Columbus, Ohio, USA EIJI ONOet al. "Optical disks with oxidation- -resistant protective films." page 567,column 2, abstract-no. 14 897d
- CHEMICAL ABSTRACTS, vol. 113, no. 16, October 15, 1990 Columbus, Ohio, USATOSHIHIKO RYUO "Calcium gadolinium gallium zirconium oxide garnet crystal and its preparation" page 734, column 1, abstract-no. 142 807 u

## Description

### BACKGROUND OF THE INVENTION

This invention pertains to thin film optical and magneto-optic memory media and more specifically to the incorporation of a quasi-amorphous or amorphous zirconia (ZrO₂) dielectric interference layer in an optical or magneto-optic data storage media.

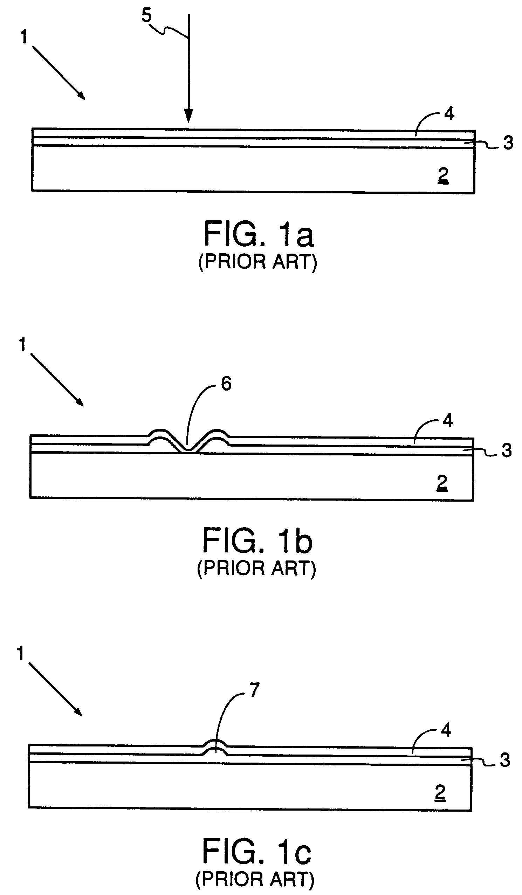

Figure 1a illustrates a prior art optical data storage disk 1, which includes a substrate 2, a recording layer 3, and a dielectric layer 4. During recording of data in disk 1, a relatively high intensity laser beam 5 passes through dielectric layer 4, strikes and heats recording layer 3, thereby ablating a portion of recording layer 3 and forming a crater 6 therein (Fig. 1b). Recording layer 3 has a high index of refraction. In order to ensure that most of the energy from laser beam 5 is used to form crater 6, and is not reflected off of disk 1, dielectric layer 4 is provided, which has an index of refraction between the index of refraction of recording layer 3 and the index of refraction of air. Layer 4 has an optical thickness on the order of one tenth of the wavelength of laser beam 5. The purpose of dielectric layer 4 is to minimize reflection of light off disk 1, and makes it easier to record data in recording layer 3, using a lower power laser than that which would be required if layer 4 were absent. It is known to use ZrO₂, SiO, AlN, Si₃N₄ or SiO₂ for layer 4.

In other types of optical media, instead of forming craters such as crater 6, bumps such as bump 7 (Fig. 1c) are formed when laser beam 5 strikes recording layer 3.

When reading the data in disk 1, a relatively low power laser beam is caused to strike the surface of disk 1. If this low power laser beam strikes a portion of the disk where there is no crater or bump, the light from this beam is reflected by disk 1 and received by a photodetector. If this laser beam strikes a crater or bump, the laser beam is not simply reflected, but is scattered by the bump or crater. Thus, the amount of light received by the photodetector when the laser beam strikes the crater or bump will be different from the amount of light received when the laser beam reflects off a smooth portion of the disk. Thus, the presence of the crater or bump will be detected by the photodetector as a bit of digitally recorded information.

Other types of optical disks which use a laser to ablate a recording layer are discussed in U.S. Patent 4,461,807, issued to Mori et al.

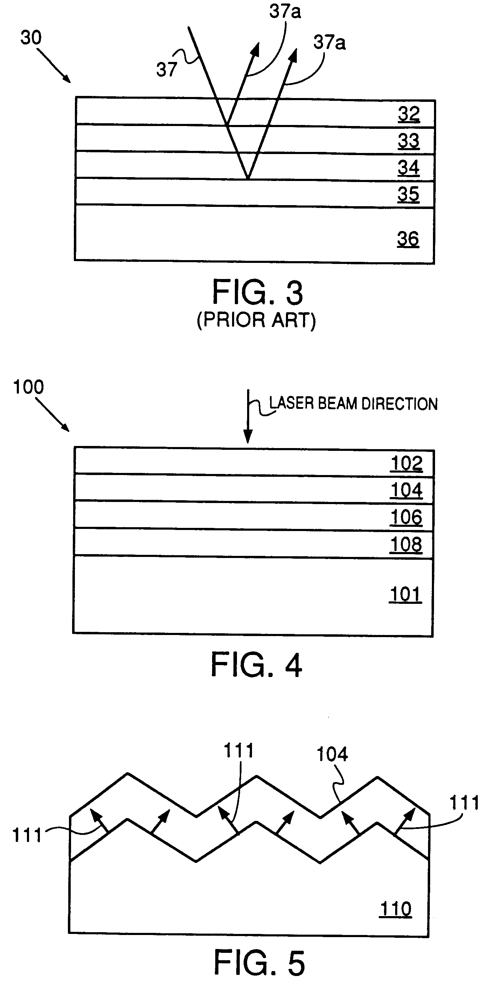

Another type of disk includes a recording layer whose crystal phase can change in response to application of a laser beam. Regions of the recording layer where the phase has been changed can be optically detected. An example of such a disk is described by Takeo Ohta et al. in "Million Cycle Overwritable Phase Change Optical Disk Media", SPIE Vol. 1078, Optical Data Storage Topical Meeting, 1989, pages 27-34. In Ohta's disk, the active layer is surrounded by dielectric layers (see Ohta Fig. 3).

The devices illustrated in Figures 1a to 1c, and the devices described by Mori and Ohta are herein referred to as optical disks.

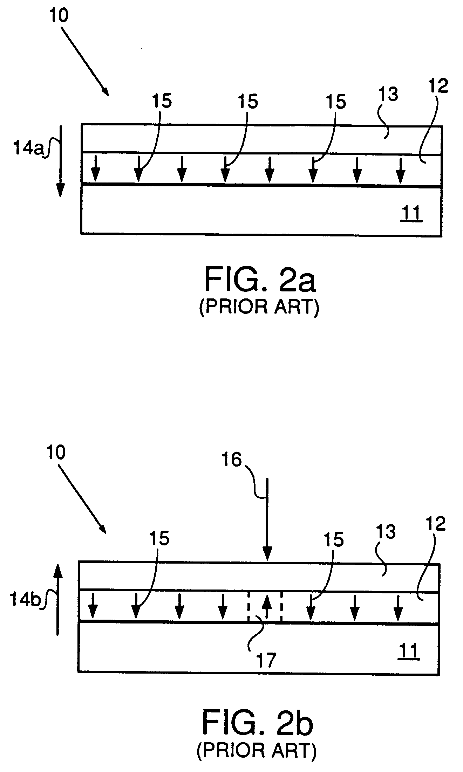

Another type of data recording device is the magneto-optic disk. A simple structure embodying this type of device is magneto-optic disk 10, which includes a substrate 11, a magneto-optic alloy 12, and a dielectric layer 13 (see Fig. 2a). Disk 10 is erased by applying an external magnetic field 14a to disk 10, (or a combination of magnetic field 14a and the presence of a laser beam) thereby magnetizing disk 10 in the direction shown by arrows 15. Data may be recorded in alloy 12 with a high power laser beam 16, which raises the temperature of a portion 17 of alloy 12 high enough to lower the value of the magnetic coercive force. This permits the direction of magnetization of portion 17 to switch, as shown in Figure 2b, because of the effect of the magnetic field from the portion of alloy 12 directly adjacent portion 17. (In another type of magneto-optic disk, an external magnetic field 14b is applied to disk 10 during writing, while the laser beam strikes portion 17, to alter the magnetization direction of portion 17.)

Alloy 12 typically has a complex dielectric constant with a high imaginary component and a real component typically of about 3. Dielectric layer 13 has a relatively high dielectric constant (preferably about 2 or more) to minimize reflection of laser beam 16 off of disk 10 during writing. Layer 13 typically has a thickness on the order of one tenth of the laser wavelength.

During reading, a relatively low power laser beam (the read laser beam) strikes disk 10. If the read laser beam strikes portion 17 of disk 10, the portion of the read beam reflecting off portion 17 has its polarization angle rotated in a positive direction. (This rotation of the light polarization is known as "Kerr rotation".) However, if the low power beam reflects off a region of alloy 12 having a magnetization opposite that of portion 17, the light reflecting off this region has its polarization angle rotated in a negative direction. During reading, the presence of dielectric layer 13 increases the amount of rotation of the light reflected off disk 10. The effect of dielectric layer 13 on the angle of rotation of polarization is discussed by Chen et al. in "An Investigation of Amorphous Tb-Fe Thin Films For Magneto-Optic Memory Application," IEEE Transactions on Magnetics, Vol. Mag-16, No. 5, September 1980, pp. 1194-1196.

Figure 3 illustrates another type of magneto-optic disk 30 including a dielectric layer 32, a magneto-optic alloy 33, a dielectric layer 34, a metal reflector layer 35, and a substrate 36. An example of such a disk is discussed by Chen et al. in "Optical Data Storage," SPIE, Vol. 382, January 17-20, 1983, pages 264-268. During reading, a portion 37a of a laser beam 37 reflects off alloy 33. A portion 37b of beam 37 passes through alloy 33 and dielectric layer 34, reflects off layer 35, and passes through layers 34, 33, and 32. Portion 37b of light emerging from disk 30 constructively interferes with portion 37a to produce a stronger magneto-optic effect.

Another type of magneto-optic disk is discussed in U.S. Patent 4,579,777, issued to Honguu et al.. Also see the article by E. Schultheiss et al. entitled "Production Technology for Magnetooptic Data Storage Media", published in Solid State Technology, March 1988, pages 106-112.

In each of the above-described types of data storage disks, one or more dielectric layers are used to facilitate writing to the disk, thus enhancing the signal-to-noise ratio exhibited by the disks. In addition, the dielectric layer provides protection against corrosion of the magneto-optic alloy or the recording layer.

Materials used as dielectric layers in optical disks or magneto-optic disks include SiO, SiO₂, Si₃N₄, AlN and ZrO₂. SiO₂ is amorphous, but has the disadvantage of a relatively low refractive index (e.g., about 1.4). SiO is also amorphous, and has the advantage of a higher refractive index (e.g., about 2.0), but it is difficult to control the amount of oxygen in an SiO film because SiO is not stoichiometrically stable compared to other oxide materials such as SiO₂. Thus, when attempting to sputter an SiO film, one usually forms an SiOₓ film, in which x can vary, and thus the refractive index can also vary. Since dielectric film optical thicknesses must be controlled with great accuracy, such a variation in refractive indices is unacceptable compared with materials such as SiO. ZrO₂ has a high refractive index (about 2.0) and is stoichiometrically stable when sputtered from a Zr0₂ sputtering target compared to materials such as SiO. In other words, the oxygen content of a ZrO₂ film does not vary greatly as a function of sputtering conditions when sputtered from a Zr0₂ target. However, sputtered ZrO₂ is crystalline. The crystal boundaries and rough interfaces of crystals in Zr0₂ can create noise in the laser signal during reading. Further, ZrO₂ can exhibit polymorphism (e.g., two or more types of phases of ZrO₂ in one film). This polymorphism can create a birefringence effect, and thus increase noise in an output signal.

### SUMMARY OF THE INVENTION

In one embodiment of our invention, a ZrO₂ film is vacuum-deposited onto a magneto-optic recording medium. In another embodiment, the ZrO₂ film is vacuum-deposited onto an optical recording medium. In both of these embodiments, the ZrO₂ film includes an additive which causes the vacuum-deposited ZrO₂ to be amorphous or near-amorphous. (By near-amorphous, it is meant that the crystallites, if any, have a size less than or equal to about 10 Å.) The additive is typically a metal oxide which exhibits no solid solubility or miscibility in ZrO₂, or only a very limited solid solubility or miscibility in ZrO₂. In one embodiment, the additive is selected from the group consisting of Al₂O₃, SiO₂, BeO, WO₃, Ta₂O₅, V₂O₅ and PbO. Of importance, because this additive has only a limited solid solubility or miscibility, the additive constitutes less than 30% by weight of the film and thus does not degrade the optical characteristics of the ZrO₂ film (e.g., the additive will not degrade the refractive index). In one embodiment, the additive constitutes less than 20% by weight of the film.

The ZrO₂ film is typically sputtered and includes a stabilizer such as Y₂O₃, LaO, CaO, MgO, ThO₂, CeO₂, HfO₂, or Sc₂O₃. Other stabilizers can also be used. The addition of the stabilizer will also not degrade the refractive index appreciably from that of pure ZrO₂. The stabilizer tends to stabilize the ZrO₂ sputtering target in its high temperature cubic phase, thereby reducing the tendency of the sputtering target to crack due to phase transformation during sputtering. In one embodiment, the ZrO₂ sputtering target (and hence the resulting ZrO₂ film) comprises ten weight percent Al₂O₃ and five weight percent Y₂O₃.

### BRIEF DESCRIPTION OF THE DRAWINGS

Figures 1a, 1b, and 1c illustrate in cross section an optical disk constructed in accordance with the prior art.

Figures 2a and 2b illustrate in cross section a first type of prior art magneto-optic disk.

Figure 3 illustrates in cross section a second type of prior art magneto-optic disk.

Figure 4 illustrates in cross section a magneto-optic disk constructed in accordance with a first embodiment of the invention.

Figure 5 illustrates a magneto-optic alloy sputtered onto a crystalline underlayer.

Figure 6 illustrates a magneto-optic disk constructed in accordance with a second embodiment of the invention.

Figure 7 illustrates a magneto-optic disk constructed in accordance with a third embodiment of the invention.

Figure 8 illustrates a magneto-optic disk constructed in accordance with a fourth embodiment of the invention.

Figure 9 illustrates an optical disk constructed in accordance with a fifth embodiment of our invention.

Figure 10 is a phase diagram of ZrO₂-Al₂O₃, showing the low solid solubility of Al₂O₃ in ZrO₂.

Figure 11 is a phase diagram of ZrO₂-BeO showing the low solid solubility of BeO in ZrO₂.

### DETAILED DESCRIPTION

Figure 4 illustrates a magneto-optic disk 100 constructed in accordance with a first embodiment of our invention. Disk 100 includes a glass substrate 101, a dielectric layer 102, a magneto-optic alloy layer 104, a dielectric layer 106, and a metal layer 108. Although in one embodiment, substrate 101 is glass, in another embodiment, other materials such as polycarbonate, acrylic or other polymer compounds are used. Metal layer 108 is provided to reflect laser light, and can be a material such as aluminum, copper, gold, silver or other metallic or non-metallic reflective materials.

Alloy layer 104 is typically a TbFe alloy including 26% Tb and 74% Fe, and is RF diode sputtered at a pressure of 20 milli-torr of argon and a power of 1 Kw using a target having an eight inch diameter. Alternatively, layer 104 may be DC magnetron or RF magnetron sputtered at 1 to 10 milli-torr and 1 Kw of power. However, other power densities, pressures, target geometries and sizes, and DC or RF magnetron or diode sputtering may also be used. In addition, other magneto-optic alloys and compositions such as TbFeCo, GdCo, GdFe, TbFe, DyFe, GdTbFe, TbDyFe, HoFe, HoFeCo, HoCo, MnBi, MnSb, and CoPt can be used. The alloys listed in U. S. Patent 4,579,777, issued to Honguu, and the alloys described in U.S. Patent 4,670,353, issued to Sakurai, may also be used. Alloy layer 104 is typically 20 to 100 nm thick.

In one embodiment, layers 102 and 106 include five weight percent Y₂O₃, ten weight percent Al₂O₃, with the remainder as ZrO₂. In another embodiment layers 102 and 106 contain 8% Y₂O₃ and 5% Al₂0₃. Sputtering layers 102 and 106 is typically accomplished using RF magnetron sputtering at a pressure of 4 milli-torr of argon and a power of 1 Kw, and an 8 inch diameter sputtering target. In other embodiments, RF diode sputtering can be used. Also, other pressures and power densities, target geometries and sizes can also be used. Layers 102 and 106 may be 50Å to several thousand angstroms thick, depending on the wavelength of the laser used to read or write data into alloy 104, and the other structures in the magnetic media. As mentioned above, the addition of Al₂O₃ reduces the crystal size in layers 102 and 106 and can render layers 102 and 106 amorphous or near-amorphous. Of importance, the inclusion of Al₂O₃ in layers 102 and 106 enhances their ability to protect against corrosion. Also, because layers 102 and 106 are amorphous, there is no scattering of laser light by grain boundaries or rough interfaces between the Zr0₂ and adjacent layers created by crystalline Zr0₂ morphology as the laser light passes therethrough. In addition, there is no scattering of laser light by a birefringence effect caused by polymorphism in the ZrO₂ film.

Although in one embodiment, five weight percent Y₂O₃ and ten weight percent Al₂O₃ are used, other proportions of these materials may also be used. For example, the Y₂O₃ concentration can vary between two and fifteen percent and the Al₂O₃ concentration can vary between two and thirty percent.

As mentioned above, Y₂O₃ serves as a stabilizer which stabilizes the ZrO₂ sputtering target in its high temperature cubic phase, thereby reducing the tendency of the sputtering target to crack due to phase transformation during sputtering. Other stabilizers can also be used instead of Y₂O₃, e.g., LaO, CaO, MgO, ThO₂, CeO₂, HfO₂, Sc₂O₃, or other stabilizers. Also, as mentioned above, instead of using Al₂O₃, other additives can be provided which cause the ZrO₂ film to become amorphous or near-amorphous. Typically, such an additive is a metal oxide which exhibits no solid solubility or miscibility in bulk ZrO₂, or only a very limited solid solubility or miscibility in the ZrO₂. Materials such as SiO₂, BeO, WO₃, Ta₂O₅, V₂O₅, PbO or other metallic oxides can be used for this purpose.

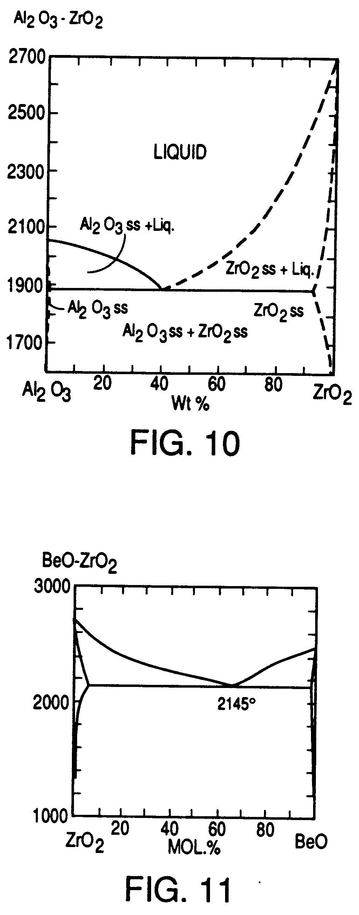

Figure 10 is a phase diagram of Al₂O₃-ZrO₂. As can be seen Al₂O₃ exhibits minimal solid solubility in bulk ZrO₂. For example, at 1880°C (the temperature at which Al₂O₃ is most soluble in ZrO₂), if more than 6% Al₂O₃ is present in the ZrO₂ in bulk form, the Al₂O₃ comes out of solid solution. Below 1600°C, the phase diagram indicates about zero solid solubility of Al₂O₃ in ZrO₂. As discussed above, sputtering a thin film of ZrO₂ alloyed with Al₂O₃ yields an amorphous or substantially amorphous film.

Figure 11 is a phase diagram of BeO-ZrO₂. As can be seen, BeO similarly exhibits almost no solid solubility in ZrO₂.

Of importance, without the above-mentioned additive, under normal sputtering conditions, ZrO₂ will have a crystal size of about 100 to several thousand angstroms. However, in one embodiment of our invention, the additive reduces the crystal size below 50 Å, and typically to a size of 10 Å or less.

Layer 108 is a metallic or non-metallic reflective layer, and can be, for example, aluminum or gold, copper or silver in the range of 100Å to 10000Å. Although dielectric layers 102 and 106 and alloy layer 104 are typically formed by sputtering, these layers can be formed by other techniques as well, e.g., other vacuum deposition techniques such as thermal evaporation, electron beam plating or ion plating.

In a preferred embodiment, the structure of Figure 4 is formed by successively sputtering onto substrate 101, layers 108, 106, 104, and 102. Thus, alloy layer 104 is sputtered onto amorphous ZrO₂ layer 106. By providing a nucleation layer for alloy layer 104 which is amorphous, the properties of magneto-optic layer 104 are improved. One reason for this is that it is known that when a rare earth magneto-optic alloy is sputtered onto a surface, the magnetization direction is perpendicular to the surface that the magneto-optic alloy is deposited on. If instead of using amorphous or near-amorphous layer 106, one used a crystalline layer 110 (Fig. 5), layer 110 would be jagged, and magneto-optic layer 104 would include regions having magnetization directions 111 that were not generally perpendicular to the surface of the disk substrate. Thus, by providing an amorphous or near amorphous nucleation layer, magneto-optic alloy 104 is formed on a relatively flat surface, and thus the direction of magnetization is consistently perpendicular to disk 100 and will maximize polar Kerr rotation of the laser read back signal and not cause additional noise in the laser read back signal. Another advantage of this structure is that if the angle of magnetization is kept as perpendicular as possible to the disk surface, the return path of the magnetic flux is kept as short as possible, and as uniform as possible, thereby making the periphery of the magnetic domain as smooth as possible and hence making it easier to provide high density recording because of minimized domain size and minimized domain edge noise.

Another advantage of amorphous or near-amorphous ZrO₂ is that amorphous or near-amorphous ZrO₂ tends to retard corrosion of the magneto-optic alloy more effectively than crystalline ZrO₂.

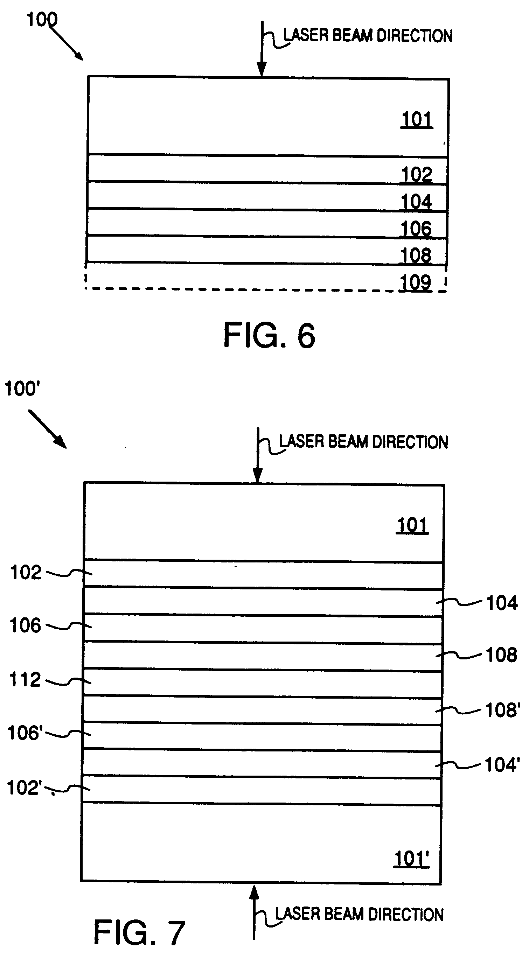

Figure 6 illustrates another embodiment of our invention. The only difference between Figures 4 and 6 is that in Figure 6, layers 102, 104, 106 and 108 are sputtered onto substrate 101, in that order, while in Figure 4, layers 108, 106, 104 and 102 are sputtered onto substrate 101, in that order. Also, in Figure 6, the read and write laser beams must pass through substrate 101, whereas in Figure 4, the read and write laser beams do not pass through substrate 101.

An optional layer 109 is shown in phantom in Fig. 6. Layer 109 may be acrylic, amorphous or near-amorphous ZrO_{2,} or other material for protecting layer 104 (e.g. against corrosion). Layer 109 may also be an adhesive layer for adhering the structure of Figure 6 to a second structure (identical to Figure 6) for double-sided optical recording.

In one embodiment, substrate 101 can have a spiral groove formed therein by photomasking and etching, having a depth of 600 to 700 Å and a pitch of about 1.5 ». In the case of substrates made of polymers such as polycarbonate, grooves may be formed by injection molding with a pre-grooved mold. The spiral groove formed in substrate 101 is part of a means for formatting the disk known in the art as "ISO format".

Although in the embodiment of Figures 4 and 6 layer 104 is magneto-optic film, in another embodiment of our invention, layer 104 is a film whose morphology changes in response to laser light (instead of having its magnetization direction change). For example, in one such embodiment, a crystalline recording layer could become amorphous in response to a laser beam or vice versa. In another such embodiment, the laser causes the crystal phase of the material to change. Regions of morphology change in such an embodiment can be optically detected with a read laser beam. Materials which can be used for layer 104 in such an embodiment are discussed by the Ohta article, and include GeTe-Sb₂Te₃-Sb alloys. Other materials include amorphous Se and As. Figure 7 illustrates a third embodiment of our invention. In Figure 7, substrate 101, dielectric layer 102, magneto-optic alloy layer 104, dielectric layer 106 and metallic layer 108 perform the same function as described above. In addition, substrate 101′, dielectric layer 102′, magneto-optic alloy layer 104′, dielectric layer 106′ and metallic layer 108′ function in the same manner as corresponding layers 101-108. A binder layer 112, which can be epoxy or another adhesive, binds the component portions of disk 100′ together. In this way, a two-sided magneto-optic disk is provided. Data can be independently recorded in magneto-optic alloy layers 104 and 104′ using laser beams striking opposite sides of the disk through substrates 101 and 101′ respectively.

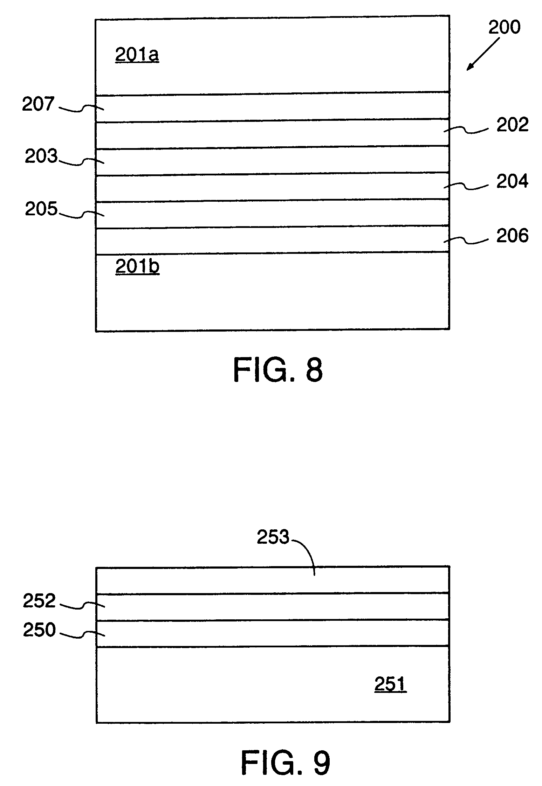

Figure 8 illustrates a magneto-optic disk 200 including a substrate 201a, a first protective layer 207 (a very thin metal film), a second protective layer 202 (typically a dielectric film), and a magneto-optic recording layer 203. Also included is a spacer layer 204, an aluminum reflective film 205, an adhesive layer 206, and a second substrate 201b. This structure is similar to that described by the Honguu patent. (Layers 201a, 207, 202, 203, 204, 205, 206 and 201b correspond to Honguu layers 1a, 7, 2, 3, 4, 5, 6 and 1b, respectively. See Honguu Fig. 2.) However, instead of using the material suggested by Honguu for dielectric layer 202 and spacer layer 204, amorphous or near-amorphous ZrO₂ is used.

Other embodiments of our invention are similar to the structures disclosed in Figures 1a, 1b, 1c, 2a, 2b and 3, described above, except instead of using prior art dielectric materials in these structures, amorphous or near-amorphous ZrO₂ including the above-mentioned additive is used. In such embodiments, the substrate may be glass, acrylic, polycarbonate or other appropriate material. For the case of the embodiment of Figures 2a, 2b and 3, the magneto-optic alloy can be any of the previously mentioned magneto-optic alloys. The various layers in these structures may be vacuum deposited, e.g. by sputtering, ion plating, evaporation or other techniques.

For the case of the embodiment of Figures 1a-1c, the recording layer may be a material such as tellurium (Te) about 100 to 2000Å thick. The recording layer may also be one of the recording layer materials listed in the Mori patent. The substrate may be glass or plastic. In one embodiment, recording layer 3 is applied to substrate 1 by sputtering or another deposition technique, and amorphous or near amorphous ZrO₂ is sputtered onto layer 3.

Although Figures 1a, 1b and 1c illustrate a dielectric film formed on an optical recording media, in another embodiment, an amorphous or substantially amorphous ZrO₂ layer 250 is deposited onto a substrate 251, and the optical recording layer 252 is deposited onto the amorphous or substantially amorphous ZrO₂ 250 (Figure 9). In such an embodiment, during reading and writing, laser light is passed through the substrate and the ZrO₂ film prior to striking the recording media. An optional additional amorphous or near-amorphous ZrO₂ layer 253 may be formed on recording layer 252 for corrosion protection.

In the above-described embodiments involving sputtering of ZrO₂, ZrO₂ is sputtered from a sputtering target including ZrO₂, a stabilizer, and the additive which causes the ZrO₂ to be amorphous. However, ZrO₂ can also be sputtered using reactive sputtering. In such an embodiment, the target would include zirconium and aluminum, and would be sputtered in the presence of oxygen, which would oxidize the zirconium and aluminum during sputtering to form ZrO₂ and Al₂O₃.

## Claims

1. A structure for use as a data storage device comprising a substrate (101), a first dielectric layer (102, 106) formed on said substrate, a magneto-optic layer (104) formed on said first dielectric layer, and a second dielectric layer (102, 106) formed on said magneto-optic layer (104), characterised in that at least one of said first and second dielectric layers is amorphous or near-amorphous and comprises more than about 65% ZrO₂, wherein the ZrO₂ crystallites, if any, have a size less than or equal to about 10Å, a stabilizer and a metal oxide having substantially no solid solubility in bulk ZrO₂, said metal oxide comprising less than about 30% by weight of said at least one layer.

2. Structure for use as a data storage device of claim 1 wherein both of said first and second dielectric layers are amorphous or near-amorphous and comprise more than about 65% ZrO₂, a stabilizer and a metal oxide having substantially no solid solubility in bulk ZrO₂, said metal oxide comprising less than about 30% of said first and second dielectric layers.

3. Structure for use as a data storage device of claim 1, further characterized in that said metal oxide is selected from the group consisting of Al₂O₃, SiO₂, BeO, WO₃, Ta₂O₅, V₂O₅ and PbO.

4. Structure for use as a data storage device of any one of claims 1 to 3, further characterized in that said dielectric layers (102, 106) are sputtered onto said structure.

5. Structure for use as a data storage device of any one of claims 1 to 4, further characterized in that said magneto-optic layer (104) comprises a rare earth-transition metal alloy having an amorphous structure, and which exhibits a magneto-optic effect and has an easy magnetization direction normal to the plane of said magneto-optic layer.

6. Structure for use as a data storage device of claim 5 wherein said magneto-optic layer comprises an alloy selected from the group of alloys consisting of GdCo, GdFe, TbFe, DyFe, GdTbFe, TbDyFe, TbFeCo, HoFe and HoFeCo.

7. Structure for use as a data storage device of any one of the preceding claims further characterized by comprising a reflective layer (108) formed between said substrate and said first dielectric layer.

8. Structure for use as a data storage device of any one of claims 1 to 6 further characterized by comprising a first reflective layer (108) formed on said second dielectric layer.

9. Structure for use as a data storage device of claim 8 further characterized by comprising a second substrate, a third dielectric layer (102′) formed on said second substrate, a second magneto-optic layer (104′) formed on said third dielectric layer, a fourth dielectric layer (106′) formed on said second magneto-optic layer, a second reflective layer (108′) formed on said fourth dielectric layer, said first reflective layer being affixed to said second reflective layer by an adhesive layer (112), said first, second, third and fourth dielectric layers being amorphous or near-amorphous and comprising more than about 65% ZrO₂, a stabilizer and a metal oxide having substantially no solid solubility in bulk ZrO₂, said metal oxide comprising less than about 30% of said first, second, third and fourth dielectric layers.

10. Structure for use as a data storage device of any one of the preceding claims further characterized in that said dielectric layers have a refractive index on the order of about 2.

11. A method for forming a data storage device comprising the steps of depositing a first dielectric layer (102, 106) on a substrate (101), forming a magneto-optic layer (104) on said first dielectric layer, and forming a second dielectric layer (102, 106) on said magneto-optic layer, characterised in that at least one of said first and second dielectric layers is amorphous or near-amorphous and comprises more than about 65% ZrO₂, wherein the ZrO₂ crystallites, if any, have a size less than or equal to about 10 Å a stabilizer and a metal oxide having substantially no solid solubility in bulk ZrO₂, said metal oxide comprising less than about 30% by weight of said at least one layer.

12. Method for forming a data storage device of claim 11 wherein both of said first and second dielectric layers are amorphous or near-amorphous and comprise more than about 65% ZrO₂, a stabilizer and a metal oxide having substantially no solid solubility in bulk ZrO₂, said metal oxide comprising less than about 30% of said layers.

13. Method for forming a data storage device of claim 11, further characterized in that said metal oxide is selected from the group consisting of Al₂O₃, SiO₂, BeO, WO₃, Ta₂O₅, V₂O₅ and PbO.

14. Method for forming a data storage device of any one of claims 11 to 13, further characterized in that said dielectric layers (102, 106) are formed by sputtering.

15. Method for forming a data storage device of any one of claims 11 to 14, further characterized in that said magneto-optic layer (104) comprises a rare earth-transition metal alloy having an amorphous structure, and which exhibits a magneto-optic effect and has an easy magnetization direction normal to the plane of said magneto-optic layer.

16. Method for forming a data storage device of claim 15 wherein said magneto-optic layer comprises an alloy selected from the group of alloys consisting of GdCo, GdFe, TbFe, DyFe, GdTbFe, TbDyFe, TbFeCo, HoFe and HoFeCo.

17. Method for forming a data storage device of any one of claims 11 to 16 further characterized by comprising the step of forming a reflective layer (108) between said substrate and said first dielectric layer.

18. Method for forming a data storage device of any one of claims 11 to 16 further characterized by comprising the step of forming a first reflective layer (108) on said second dielectric layer.

19. Method for forming a data storage device of claim 18 further characterized by comprising the steps of forming a third dielectric layer (102′) on a second substrate, forming a second magneto-optic layer (104′) on said third dielectric layer, forming a fourth dielectric layer (106′) on said second magneto-optic layer, forming a second reflective layer (108′) on said fourth dielectric layer, and affixing said first reflective layer to said second reflective layer, said first, second, third and fourth dielectric layers being amorphous or near-amorphous and comprising more than about 65% ZrO₂, a stabilizer and a metal oxide having substantially no solid solubility in bulk ZrO₂, said metal oxide comprising less than about 30% of said dielectric layers.

20. Method for forming a data storage device of any one of preceding claims 11 to 19 further characterized in that said dielectric layers have a refractive index on the order of about 2.

## Patentansprüche

1. Anordnung zur Verwendung als Daten-Speichervorrichtung mit einem Substrat (101), einer auf dem Substrat ausgebildeten ersten dielektrischen Schicht (102, 106), einer auf der ersten dielektrischen Schicht ausgebildeten magneto-optischen Schicht (104), und einer auf der magneto-optischen Schicht (104) ausgebildeten zweiten dielektrischen Schicht (102, 106), **dadurch gekennzeichnet, daß**
zumindest eine der ersten oder zweiten dielektrischen Schichten amorph oder beinahe amorph ist und mehr als etwa 65 % ZrO₂ umfaßt, wobei die ZrO₂-Kristallite, soweit vorhanden, eine Größe von weniger als oder höchstens etwa 10 A aufweisen, und einen Stabilisator und ein Metalloxid mit im wesentlichen keiner Festkörper-Löslichkeit in massivem ZrO₂ enthält, wobei das Metalloxid weniger als etwa 30 Gew. % der zumindest einen Schicht umfaßt.

2. Anordnung zur Verwendung als Daten-Speichervorrichtung gemäß Anspruch 1, in der die erste und die zweite dielektrische Schicht amorph oder beinahe amorph sind und mehr als etwa 65 % ZrO₂ umfassen, und einen Stabilisator und ein Metalloxid mit im wesentlichen keiner Festkörper-Löslichkeit in massivem ZrO₂ enthalten, wobei das Metalloxid weniger als etwa 30 % der ersten und der zweiten dielektrischen Schicht umfaßt.

3. Anordnung zur Verwendung als Daten-Speichervorrichtung gemäß Anspruch 1,
**dadurch gekennzeichnet, daß**
das Metalloxid aus einer Gruppe ausgewählt ist, die aus Al₂O₃, SiO₂, BeO, WO₃, Ta₂O₅, V₂O₅ und PbO besteht.

4. Anordnung zur Verwendung als Daten-Speichervorrichtung gemäß einem der Ansprüche 1 bis 3,
**dadurch gekennzeichnet, daß**
die dielektrischen Schichten (102, 106) auf die Anordnung aufgedampft sind.

5. Anordnung zur Verwendung als Daten-Speichervorrichtung gemäß einem der Ansprüche 1 bis 4,
**dadurch gekennzeichnet, daß**
die magneto-optische Schicht (104) eine Seltenerd-Übergangsmetallverbindung mit einer amorphen Struktur umfaßt, die einen magneto-optischen Effekt zeigt und eine schwache Magnetisierung senkrecht zur Ebene der magneto-optischen Schicht aufweist.

6. Anordnung zur Verwendung als Daten-Speichervorrichtung gemäß Anspruch 5, in der die magneto-optische Schicht eine Verbindung umfaßt, die aus einer Gruppe von Verbindungen ausgewählt ist, die aus GdCo, GdFe, TbFe, DyFe, GdTbFe, TbDyFe, TbFeCo, HoFe und HoFeCo besteht.

7. Anordnung zur Verwendung als Daten-Speichervorrichtung gemäß einem der vorhergehenden Ansprüche,
**dadurch gekennzeichnet, daß**
sie eine zwischen dem Substrat und der ersten dielektrischen Schicht ausgebildete reflektierende Schicht (108) umfaßt.

8. Anordnung zur Verwendung als Daten-Speichervorrichtung gemäß einem der Ansprüche 1 bis 6,
**dadurch gekennzeichnet, daß**
sie eine auf der zweiten dielektrischen Schicht ausgebildete erste reflektierende Schicht (108) umfaßt.

9. Anordnung zur Verwendung als Daten-Speichervorrichtung gemäß Anspruch 8,
**dadurch gekennzeichnet, daß**
sie ein zweites Substrat, eine auf dem zweiten Substrat ausgebildete dritte dielektrische Schicht (102′), eine auf der dritten dielektrischen Schicht ausgebildete zweite magneto-optische Schicht (104′), eine auf der zweiten magneto-optischen Schicht ausgebildete vierte dielektrische Schicht (106′), eine auf der vierten dielektrischen Schicht ausgebildete zweite reflektierende Schicht (108′) umfaßt, wobei die erste reflektierende Schicht durch eine klebende Schicht (112) an der zweiten reflektierenden Schicht befestigt ist, wobei die ersten, zweiten, dritten und vierten dielektrischen Schichten amorph oder beinahe amorph sind und mehr als etwa 65 % ZrO₂ umfassen und einen Stabilisator und ein Metalloxid mit im wesentlichen keiner Festkörper-Löslichkeit in massivem ZrO₂ enthalten, wobei das Metalloxid weniger als etwa 30% der ersten, zweiten, dritten und vierten dielektrischen Schichten umfaßt.

10. Anordnung zur Verwendung einer Daten-Speichervorrichtung gemäß einem der vorhergehenden Ansprüche,
**dadurch gekennzeichnet, daß**
die dielektrischen Schichten einen Brechungsindex von etwa 2 aufweisen.

11. Verfahren zur Herstellung einer Daten-Speichervorrichtung mit den Schritten Anlagern einer ersten dielektrischen Schicht (102, 106) auf einem Substrat (101), Bilden einer magneto-optischen Schicht (104) auf der ersten dielektrischen Schicht, und
Bilden einer zweiten dielektrischen Schicht, (102, 106) auf der magneto-optischen Schicht, **dadurch gekennzeichnet, daß**
zumindest eine der ersten und der zweiten dielektrischen Schichten amorph oder beinahe amorph ist und mehr als etwa 65 % ZrO₂ umfaßt, wobei die ZrO₂-Kristallite, soweit vorhanden, eine Größe von weniger als oder höchstens 10 A aufweisen, und einen Stabilisator und ein Metalloxid mit im wesentlichen keiner Festkörper-Löslichkeit in massivem ZrO₂ enthält, wobei das Metalloxid weniger als etwa 30 Gew. % der zumindest einen Schicht umfaßt.

12. Verfahren zur Herstellung einer Daten-Speichervorrichtung gemäß Anspruch 11, wobei die erste und die zweite dielektrische Schicht amorph oder beinahe amorph sind und mehr als etwa 65 % ZrO₂ umfassen, und einen Stabilisator und ein Metalloxid mit im wesentlichen keiner Festkörper-Löslichkeit in massivem ZrO₂ enthalten, wobei das Metalloxid weniger als etwa 30% der ersten und der zweiten dielektrischen Schicht umfaßt.

13. Verfahren zur Herstellung einer Daten-Speichervorrichtung gemäß Anspruch 11,
**dadurch gekennzeichnet, daß**
das Metalloxid aus einer Gruppe ausgewählt ist, die aus Al₂O₃, SiO₂, BeO, WO₃, Ta₂O₅, V₂O₅ und PbO besteht.

14. Verfahren zur Herstellung einer Daten-Speichervorrichtung gemäß einem der Ansprüche 11 bis 13,
**dadurch gekennzeichnet, daß**
die dielektrischen Schichten (102, 106) durch Aufdampfen gebildet werden.

15. Verfahren zur Herstellung einer Daten-Speichervorrichtung gemäß einem der Ansprüche 11 bis 14,
**dadurch gekennzeichnet, daß**
die magneto-optische Schicht (104) eine Seltenerd-Übergangsmetallverbindung mit einer amorphen Struktur umfaßt, die einen magneto-optischen Effekt zeigt und eine schwache Magnetisierung senkrecht zur Ebene der magneto-optischen Schicht aufweist.

16. Verfahren zur Herstellung einer Daten-Speichervorrichtung gemäß Anspruch 15, wobei die magneto-optische Schicht eine Verbindung umfaßt, die aus einer Gruppe von Verbindungen ausgewählt ist, die aus GdCo, GdFe, TbFe, DyFe, GdTbFe, TbDyFe, TbFeCo, HoFe und HoFeCo besteht.

17. Verfahren zur Herstellung einer Daten-Speichervorrichtung gemäß einem der Ansprüche 11 bis 16,
**gekennzeichnet durch**
den Schritt des Bildens einer reflektierenden Schicht (108) zwischen dem Substrat und der ersten dielektrischen Schicht.

18. Verfahren zur Herstellung einer Daten-Speichervorrichtung gemäß einem der Ansprüche 11 bis 16,
**gekennzeichnet durch**
den Schritt des Bildens einer reflektierenden Schicht (108) auf der zweiten dielektrischen Schicht.

19. Verfahren zur Herstellung einer Daten-Speichervorrichtung gemäß Anspruch 18,
**gekennzeichnet durch** die Schritte:
Bilden einer dritten dielektrischen Schicht (102′) auf einem zweiten Substrat,
Bilden einer zweiten magneto-optischen Schicht (104′) auf der dritten dielektrischen Schicht,
Bilden einer vierten dielektrischen Schicht (106′) auf der zweiten magnetooptischen Schicht (104′),
Bilden einer zweiten reflektierenden Schicht (108′) auf der vierten dielektrischen Schicht, und Befestigen der ersten reflektierenden Schicht auf der zweiten reflektierenden Schicht, wobei die ersten, zweiten, dritten und vierten dielektrischen Schichten amorph oder beinahe amorph sind und mehr als etwa 65 % ZrO₂ umfassen und einen Stabilisator und ein Metalloxid mit im wesentlichen keiner Festkörper-Löslichkeit im massivem ZrO₂ enthalten, wobei das Metalloxid weniger als etwa 30% der dielektrischen Schichten umfaßt.

20. Verfahren zur Herstellung einer Daten-Speichervorrichtung gemäß einem der Ansprüche 11 bis 19,
**dadurch gekennzeichnet, daß**
die dielektrischen Schichten einen Brechungsindex von etwa 2 aufweisen.

## Revendications

1. Structure destinée à être utilisée comme dispositif de stockage de données, comprenant un substrat (101), une première couche diélectrique (102, 106), formée sur ledit substrat, une couche magnéto-optique (104) formée sur ladite première couche diélectrique et une deuxième couche diélectrique (102, 106) formée sur ladite couche magnéto-optique (104), caractérisée en ce qu'au moins l'une desdites première et deuxième couches diélectriques est amorphe ou quasi amorphe et comprend plus d'environ 65 % de ZrO₂, les éventuels cristallites de ZrO₂ ayant une granulométrie inférieure ou égale à 10 Å, un stabilisant et un oxyde métallique n'ayant pour ainsi dire aucune solubilité à l'état solide dans le ZrO₂ en vrac, ledit oxyde métallique représentant moins d'environ 30 % en poids de ladite au moins une couche.

2. Structure destinée à être utilisée comme dispositif de stockage de données selon la revendication 1, dans laquelle les deux desdites première et deuxième couches diélectriques sont amorphes ou quasi amorphes et comprennent plus d'environ 65 % de ZrO₂, un stabilisant et un oxyde métallique n'ayant pour ainsi dire aucune solubilité à l'état solide dans le ZrO₂ en vrac, ledit oxyde métallique représentant moins d'environ 30 % desdites première et deuxième couches diélectriques.

3. Structure destinée à être utilisée comme dispositif de stockage de données selon la revendication 1, caractérisée en outre en ce que ledit oxyde métallique est choisi parmi l'ensemble comprenant Al₂O₃, SiO₂, BeO, WO₃, Ta₂O₅, V₂O₅ et PbO.

4. Structure destinée à être utilisée comme dispositif de stockage de données selon l'une quelconque des revendications 1 à 3, caractérisée en outre en ce que lesdites couches diélectriques (102, 106) sont appliquées sur ladite structure par pulvérisation cathodique.

5. Structure destinée à être utilisée comme dispositif de stockage de données selon l'une quelconque des revendications 1 à 4, caractérisée en outre en ce que ladite couche magnéto-optique (104) comprend un alliage d'un métal de transition des terres rares ayant une structure amorphe, et qui présente un effet magnéto-optique et a une direction de magnétisation aisée normale au plan de ladite couche magnéto-optique.

6. Structure destinée à être utilisée comme dispositif de stockage de données selon la revendication 5, dans laquelle ladite couche magnéto-optique comprend un alliage choisi parmi l'ensemble d'alliages comprenant GdCo, GdFe, TbFe, DyFe, GdTbFe, TbDyFe, TbFeCo, HoFe et HoFeCo.

7. Structure destinée à être utilisée comme dispositif de stockage de données selon l'une quelconque des revendications précédentes, caractérisée en outre en ce qu'elle comprend une couche réfléchissante (108) formée entre ledit substrat et ladite première couche diélectrique.

8. Structure destinée à être utilisée comme dispositif de stockage de données selon l'une quelconque des revendications 1 à 6, caractérisée en outre en ce qu'elle comprend une première couche réfléchissante (108) formée sur ladite deuxième couche diélectrique.

9. Structure destinée à être utilisée comme dispositif de stockage de données selon la revendication 8, caractérisée en outre en ce qu'elle comprend un deuxième substrat, une troisième couche diélectrique (102′) formée sur ledit deuxième substrat, une deuxième couche magnéto-optique (104′) formée sur ladite troisième couche diélectrique, une quatrième couche diélectrique (106′) formée sur ladite deuxième couche magnéto-optique, une deuxième couche réfléchissante (108′) formée sur ladite quatrième couche diélectrique, ladite première couche réfléchissante étant fixée à ladite deuxième couche réfléchissante à l'aide d'une couche d'adhésif (112), lesdites première, deuxième, troisième et quatrième couches diélectriques étant amorphes ou quasi amorphes et comprenant plus d'environ 65 % de ZrO₂, un stabilisant et un oxyde métallique n'ayant pour ainsi dire aucune solubilité à l'état solide dans le ZrO₂ en vrac, ledit oxyde métallique représentant moins d'environ 30 % desdites première, deuxième, troisième et quatrièmes couches diélectriques.

10. Structure destinée à être utilisée comme dispositif de stockage de données selon l'une quelconque des revendications précédentes, caractérisée en outre en ce que lesdites couches diélectriques ont un indice de réfraction de l'ordre d'environ 2.

11. Procédé pour former un dispositif de stockage de données, qui comprend les étapes consistant à déposer une première couche diélectrique (102, 106) sur un substrat (101), à former une couche magnéto-optique (104) sur ladite première couche diélectrique et à former une deuxième couche diélectrique (102, 106) sur ladite couche magnéto-optique, caractérisé en ce qu'au moins l'une desdites première et deuxième couches diélectriques est amorphe ou quasi-amorphe et comprend plus d'environ 65 % de ZrO₂, les éventuelles cristallites de ZrO₂ ayant une granulométrie inférieure ou égale à environ 10 Å, un stabilisant et un oxyde métallique n'ayant pour ainsi dire aucune solubilité à l'état solide dans le ZrO₂ en vrac, ledit oxyde métallique représentant moins d'environ 30 % en poids de ladite au moins une couche.

12. Procédé pour former un dispositif de stockage de données selon la revendication 11, dans lequel les deux desdites première et deuxième couches diélectriques sont amorphes ou quasi amorphes et comprennent plus d'environ 65 % de ZrO₂, un stabilisant et un oxyde métallique n'ayant pour ainsi dire aucune solubilité à l'état solide dans le ZrO₂ en vrac, ledit oxyde métallique représentant moins d'environ 30 % en poids desdites couches.

13. Procédé pour former un dispositif de stockage de données selon la revendication 11, caractérisé en outre en ce que ledit oxyde métallique est choisi parmi l'ensemble comprenant Al₂O₃, SiO₂, BeO, WO₃, Ta₂O₅, V₂O₅ et PbO.

14. Procédé pour former un dispositif de stockage de données selon l'une quelconque des revendications 11 à 13, caractérisé en outre en ce que lesdites couches diélectriques (102, 106) sont formées par pulvérisation cathodique.

15. Procédé pour former un dispositif de stockage de données selon l'une quelconque des revendications 11 à 14, caractérisé en outre en ce que ladite couche magnéto-optique (104) comprend un alliage d'un métal de transition des terres rares ayant une structure amorphe, et qui présente un effet magnéto-optique et a une direction de magnétisation aisée normale au plan de ladite couche magnéto-optique.

16. Procédé pour former un dispositif de stockage de données selon la revendication 15, dans laquelle ladite couche magnéto-optique comprend un alliage choisi parmi l'ensemble d'alliages comprenant GdCo, GdFe, TbFe, DyFe, GdTbFe, TbDyFe, TbFeCo, HoFe et HoFeCo.

17. Procédé pour former un dispositif de stockage de données selon l'une quelconque des revendications 11 à 16, caractérisé en outre en ce qu'il comprend l'étape consistant à former une couche réfléchissante (108) entre ledit substrat et ladite première couche diélectrique.

18. Procédé pour former un dispositif de stockage de données selon l'une quelconque des revendications 11 à 16, caractérisé en outre en ce qu'il comprend l'étape consistant à former une première couche réfléchissante (108) sur ladite deuxième couche diélectrique.

19. Procédé pour former un dispositif de stockage de données selon la revendication 18, caractérisé en outre en ce qu'il comprend les étapes consistant à former une troisième couche diélectrique (102′) sur un deuxième substrat, à former une deuxième couche magnéto-optique (104′) sur ladite troisième couche diélectrique, à former une quatrième couche diélectrique (106′) sur ladite deuxième couche magnéto-optique, à former une deuxième couche réfléchissante (108′) sur ladite quatrième couche diélectrique, et à fixer ladite première couche réfléchissante à ladite deuxième couche réfléchissante, lesdites première, deuxième, troisième et quatrième couches diélectriques étant amorphes ou quasi-amorphes et comprenant plus d'environ 65 % de ZrO₂, un stabilisant et un oxyde métallique n'ayant pour ainsi dire aucune solubilité à l'état solide dans le ZrO₂ en vrac, ledit oxyde métallique représentant moins d'environ 30 % desdites couches diélectriques.

20. Procédé pour former un dispositif de stockage de données selon l'une quelconque des revendications précédentes 11 à 19, caractérisé en outre en ce que lesdites couches diélectriques ont un indice de réfraction de l'ordre d'environ 2.
